# EUROPÄISCHE PATENTSCHRIFT

(11) **EP 1 886 805 B1**
(45) Veröffentlichungstag und Bekanntmachung des Hinweises auf die Patenterteilung: **22.04.2009**
(21) Anmeldenummer: 07014857.2
(22) Anmeldetag: 28.07.2007
(51) Int. Cl.: B32B 21/00, B27N 3/04, A47B 96/20

(54) **Holzwerkstoffplatte**
Composite wood board
Plaque en matériau dérivé du bois

(30) Priorität: 08.08.2006 DE 202006012116 U
(43) Veröffentlichungstag der Anmeldung: 13.02.2008
(73) Patentinhaber: Vöhringer GmbH, 72818 Trochtelfingen (DE)
(72) Erfinder: Vöhringer, Jürgen, Dipl-Ing. (FH), 72818 Trochtelfingen (DE)
(74) Vertreter: Kohler Schmid Möbus

(56) Entgegenhaltungen:
- EP-A- 0 545 390
- EP-A- 1 103 207
- WO-A-20/06007413
- DE-A1- 19 837 458
- DE-C1- 4 439 020
- DE-U1- 20 112 599
- US-A- 5 112 209
- US-A1- 2003 165 669

## Beschreibung

Die Erfindung betrifft eine Holzwerkstoffplatte mit einem Trägermaterial und einer zumindest an einer Seite vorgesehenen Deckschicht, wobei die Deckschicht als mitteldichte Faserplatte (MDF-Platte) ausgebildet ist.

Für die Sperrholzherstellung werden u. a. Deckfurniere mit einer Dicke von 0,5 - 1,0 mm verwendet. Diese Deckfurniere sind die "beste Qualität" eines Rundholzstammes. Rundhölzer, d. h. Rohstoffe zu finden, die eine hinreichende Qualität bieten, wird immer schwieriger, was sich negativ auf die Kosten auswirkt.

So genannte Kombiplatten mit einer MDF-Deckschicht sind bereits bekannt, allerdings mit einer Schichtdicke der MDF-Platte von 2 mm bis 3 mm, da in der Fachwelt die Ansicht vorherrscht, dünnere MDF-Platten seien nicht herstellbar. Bei derartigen Platten ist der große Materialeinsatz ebenso wie das Gewicht der resultierenden Holzwerkstoffplatte nachteilig.

Aus der DE 201 12 599 U1 ist eine Vorrichtung für die Herstellung einer aus MDF bestehenden Platte mit einer Trocknungseinrichtung, in der die Fasern getrocknet werden, und mit Beleimungseinrichtung, in der die Fasern mit Leim versehen werden, und mit Mitteln, um die mit Leim versehenen Fasern zu einer Platte zu verpressen, bekannt. Es sind Transportmittel vorgesehen, mit denen die Fasern von der Trocknungseinrichtung zu der Beleimungseinrichtung transportiert werden.

In der EP 0 545 390 A1 ist eine Platte offenbart, die aus einem Trägermaterial, wie zum Beispiel Spanfaser, Vollholz, Sperrholz, MDF oder dergleichen, besteht, die an mindestens einer Fläche eine Beschichtung aus einem relativ dünnen Material trägt, wobei mindestens eine Stirnseite der Platte als Postforming-Kante ausgebildet ist.

Aus der DE 44 39 020 C1 ist ein Verfahren zur Herstellung eines eine Hauptfläche und eine Kante aufweisenden Möbelteils bekannt, wobei in der Hauptfläche und der Kante eine durchgehende dekorative Oberfläche vorhanden ist, indem Material einer die dekorative Oberfläche aufweisenden Platte in ihrem Mittelbereich entfernt und so eine dünne, die dekorative Oberfläche aufweisenden Schicht freigelegt und diese Schicht aus der Ebene der Hauptfläche heraus auf die Kante umgelegt und dort befestigt wird. Als Platte wird eine MDF-Platte verwendet. Als dünne, die dekorative Oberfläche aufweisende Schicht wird eine äußere Faserschicht der MDF-Platte freigelegt.

In der WO 2006/007413 A1 ist eine Laminatplatte offenbart, die eine Kernschicht aufweist, auf der akustische Schichten zur Beeinflussung des Schallverhaltens angeordnet sind. Die Kernschicht kann unter anderem aus MDF ausgebildet sein. Die akustischen Schichten sind aus Kunststoff.

Aufgabe der vorliegenden Erfindung ist es, eine Holzwerkstoffplatte bereitzustellen, die die genannten Nachteile vermeidet.

Erfindungsgemäß wird diese Aufgabe auf ebenso überraschende wie wirkungsvolle Art und Weise durch eine Holzwerkstoffplatte mit einem Trägermaterial und einer zumindest an einer Seite vorgesehenen Deckschicht gelöst, wobei die Deckschicht als mitteldichte Faserplatte (MDF-Platte) ausgebildet ist und wobei die MDF-Platte eine Schichtdicke ≤ 1,2 mm, insbesondere ≤ 1 mm, aufweist. Vorzugsweise weist die MDF-Platte eine Schichtdicke im Bereich 0,5 mm bis 1 mm auf. Entgegen der Meinung der Fachwelt ist es möglich, eine Holzwerkstoffplatte herzustellen, die als Deckschicht eine MDF-Platte mit einer so geringen Schichtdicke aufweist. Entgegen dem in der Fachwelt bestehenden Vorurteil zeigt die Erfindung eine Lösung auf, bei der MDF-Platten mit einer Schichtdicke unter 2 mm verwendet werden können. Eine MDF-Platte ist sehr eben und härter als ein Furnier. Außerdem ist sie günstiger als ein Furnier. Zudem können die erfindungsgemäßen Holzwerkstoffplatten mit sehr viel geringerem Materialeinsatz hergestellt werden. Ein weiterer Vorteil besteht darin, dass die erfindungsgemäßen Holzwerkstoffplatten erheblich leichter sind als die bisher bekannten Holzwerkstoffplatten mit dickerer MDF-Schicht oder Furnier. Dadurch eignen sich die erfindungsgemäßen Holzwerkstoffplatten insbesondere zum Einbau in Fahrzeugen, in denen auf ein geringes Gewicht geachtet werden muss, wie beispielsweise in Wohnwagen, Wohnmobilen oder Booten.

Bei einer besonders bevorzugten Ausführungsform kann als Trägermaterial eine Sperrholzplatte vorgesehen sein. Eine Sperrholzplatte und eine MDF-Platte lassen sich besonders einfach miteinander verbinden. Außerdem kann durch die Verwendung einer Sperrholzplatte eine weitere Gewichtsreduzierung bewirkt werden.

Eine besonders gute und effektiv herzustellende Verbindung zwischen Trägermaterial und Deckschicht ergibt sich, wenn die Deckschicht mit dem Trägermaterial verpresst ist.

Bei einer besonders bevorzugten Ausführungsform kann vorgesehen sein, dass die Deckschicht durch Messern einer dickeren MDF-Platte, insbesondere einer MDF-Platte mit einer Dicke > 25 mm, hergestellt ist. Durch diese Maßnahme ist es möglich, sehr dünne MDF-Plattenschichten herzustellen, die mit dem Trägermaterial zu der erfindungsgemäßen Holzwerkstoffplatte verbunden werden können.

In den Rahmen der Erfindung fällt außerdem ein Fahrzeug, insbesondere Caravan, Wohnmobil, Boot oder dergleichen mit einem Möbelstück oder einer Innenverkleidung, das bzw. die eine erfindungsgemäße Holzwerkstoffplatte aufweist.

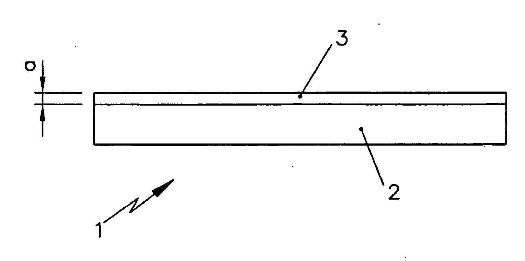

Weitere Merkmale und Vorteile der Erfindung ergeben sich aus der nachfolgenden detaillierten Beschreibung von Ausführungsbeispielen der Erfindung anhand der Figur der Zeichnung, die erfindungswesentliche Einzelheiten zeigt, sowie aus den Ansprüchen. Die einzelnen Merkmale können je einzeln für sich oder zu mehreren in beliebigen Kombinationen bei Varianten der Erfindung verwirklicht sein.

Die einzige Figur zeigte eine erfindungsgemäße Holzwerkstoffplatte in einer Schnittdarstellung.

Die in der Figur gezeigte Holzwerkstoffplatte 1 weist ein als Sperrholzschicht ausgebildetes Trägermaterial 2 auf, auf dem eine Deckschicht 3 angeordnet ist. Die Deckschicht 3 besteht aus einer MDF-Platte mit einer Dicke a ≤ 1,2 mm, vorzugsweise ≤ 1 mm. Die Deckschicht 3 und das Trägermaterial 2 sind miteinander verpresst. Die Deckschicht 3 wurde durch Messern einer dickeren MDF-Platte hergestellt. Die Herstellung einer dicken MDF-Platte ist technisch einfach durchführbar. Von dieser dicken MDF-Platte werden scheibchenartig dünnere MDF-Platten abgeschnitten, um dadurch die Deckschicht herzustellen.

## Patentansprüche

1. Holzwerkstoffplatte (1) mit einem Trägermaterial (2) und einer zumindest an einer Seite vorgesehenen Deckschicht (3), wobei die Deckschicht als mitteldichte Faserplatte (MDF-Platte) ausgebildet ist, wobei die MDF-Platte (3) eine Schichtdicke ≤ 1,2 mm, insbesondere ≤ 1 mm, aufweist, **dadurch gekennzeichnet, dass** als Trägermaterial (2) eine Sperrholzplatte vorgesehen ist.

2. Holzwerkstoff nach Anspruch 1, **dadurch gekennzeichnet, dass** die Deckschicht (3) mit dem Trägermaterial (2) verpresst ist.

3. Holzwerkstoff nach Anspruch 1 oder 2, **dadurch gekennzeichnet, dass** die Deckschicht (3) durch Messern einer dickeren MDF-Platte, insbesondere einer MDF-Platte mit einer Dicke > 25 mm, hergestellt ist.

4. Fahrzeug, insbesondere Caravan, Wohnmobil, Boot oder dergleichen mit einem Möbelstück oder einer Innenverkleidung, das bzw. die eine Holzwerkstoffplatte (1) nach einem der vorhergehenden Ansprüche aufweist.

## Claims

1. Composite wood board (1) having a base material (2) and a facing (3) provided on at least one side, the facing being in the form of medium density fibreboard (MDF), and the MDF sheet having a thickness of ≤ 1.2 mm, more particularly ≤1 mm, **characterised by** the fact that a plywood sheet is provided as the base material (2).

2. Composite wood board according to claim 1, **characterised in that** the facing (3) is compressed with the base material (2).

3. Composite wood board according to claim 1 or 2, **characterised in that** the facing (3) is produced by cutting slices from a thicker MDF sheet, more particularly an MDF sheet having a thickness > 25 mm.

4. Vehicle, more particularly a caravan, mobile home, boat or the like, having a piece of furniture or internal panelling that features a composite wood board (1) in accordance with any one of the preceding claims.

## Revendications

1. Panneau de matériau dérivé du bois (1) avec un matériau de support (2) et une couche de recouvrement (3) prévue au moins sur une face, la couche de recouvrement se présentant sous la forme d'un panneau de fibres de moyenne densité (panneau de FMD), le panneau de FMD (3) présentant une épaisseur de couche ≤ 1,2 mm, en particulier ≤ 1 mm, **caractérisé en ce qu'**il est prévu un panneau de contreplaqué comme matériau de support (2).

2. Matériau dérivé du bois selon la revendication 1, **caractérisé en ce que** la couche de recouvrement (3) est assemblée par pression au matériau de support (2).

3. Matériau dérivé du bois selon la revendication 1 ou 2, **caractérisé en ce que** la couche de recouvrement (3) est fabriquée par découpage d'un panneau de FMD plus épais, en particulier d'un panneau de FMD ayant une épaisseur > 25 mm.

4. Véhicule, en particulier caravane, mobile-home, bateau ou similaire équipé d'un meuble ou d'un habillage intérieur, qui présente un panneau de matériau dérivé du bois (1) selon l'une des revendications précédentes.
